# EUROPEAN PATENT SPECIFICATION

(11) **EP 0 721 757 B1**
(45) Date of publication and mention of the grant of the patent: **03.12.1997**
(21) Application number: 96100065.0
(22) Date of filing: 04.01.1996
(51) Int. Cl.: A47J 19/06

(54) **Motorized vegetable mill**
Motorisierte Gemüse-Presse
Press-légumes motorisée

(30) Priority: 10.01.1995 IT BS950006
(43) Date of publication of application: 17.07.1996
(73) Proprietor: Ariete S.p.A., 50040 Settimello di Calenzano (Firenze) (IT)
(72) Inventor: LO RE, Antonio Francesco, I-74015 Martina Franca (Taranto) (IT); Baldacci, Lapo, I-50129 Firenze (IT)
(74) Representative: Porsia, Attilio, Dr.

(56) References cited:
- DE-A- 1 429 987
- FR-A- 1 119 792
- FR-A- 1 130 019
- FR-A- 1 507 291
- FR-A- 2 391 684
- FR-A- 2 609 414
- US-A- 2 639 748
- US-A- 3 153 392

## Description

The present invention relates to a vegetable mill, and in particular relates to a motorized vegetable mill.

Vegetable mills of motorized type are known, that is vegetable mills in which the shaft, on which is fixed the screw that performs the compressing and comminuting of the material placed in the receptacle part, is engaged with drive means such as an electric motor. An important aspect of these devices concerns the accessibility of the receptacle after use, that is, when said receptacle is to be cleaned and prepared for later use. It is essential that the receptacle and screw shaft on the one hand, and the drive means on the other, are engaged securely together, and yet are also easy to separate, so that said receptacle and said screw can be washed without having to wet the drive means.

Another problem concerning the use of the vegetable mill arises when the appliance needs to be placed on a container in order to collect the product processed by said mill. In this case it is important that the container, generally a saucepan, or other similar object, cannot slide about, especially under the effect of the vibrations generated by said vegetable mill drive means.

In FR-A-1119792 is described a vegetable mill according to the preamble of claim 1, comprising a receptacle part which is open at one end and provided at the other end with a removable perforated base part, a shaft on which is fixed a screw, the shaft rotating in an axial hole in said base part, and means for driving said shaft and means of powering said drive means, the shaft being supported by a beam connected to the said receptacle; in this device the collecting container of processed vegetable shall be of the appropriate dimension to fit in its supporting frame.

In DE-A-1429987 is also described a vegetable mill. The said device comprise a receptacle part having a perforated base part, and a handle part comprising a handle proper, driving means for driving a shaft connected at an end to that handle portion, the other end being provided with a fan, or screw, the handle part being placed above the receptacle part. In this device, the shaft is not provided with supporting means. Moreover, the handle proper of the said handle part doesn't enable to carry the whole device.

It is an object of the present invention to provide a motorized vegetable mill in which the receptacle part and the screw can easily be separated from and reconnected with the drive means. In addition, it must be possible to position this vegetable mill securely on any saucepan or similar container.

The subject of the invention is therefore a vegetable mill comprising: a cylindrical or frustoconical receptacle part which is open at one end and provided at the other end with a removable perforated base part, a shaft on which is fixed, near that end of said shaft which rotates in an axial hole in said base part, a screw, a beam with an axial hole inserted on to said shaft, its ends being engaged with supporting means projecting from the inside surface of said receptacle; the mill being characterized in that it comprises a handle part comprising means for driving said shaft and means for powering said drive means, said receptacle part and said handle part being removably connected side by side, and the free end of said shaft, and said drive means, being provided with releasable means of mutual engagement, said handle part comprising a body containing said drive means and said power supply means, a handle proper, and an arm which projects radially from said body and has at its free end a power takeoff arranged axially with respect to said arm, said power takeoff being connected in some suitable way to said drive means and engageable with said free end of said shaft.

Advantageously, said drive means comprise a geared-down electric motor able to run on mains electricity or on a disposable or rechargeable battery.

In one embodiment of the invention, the side of said handle part that faces in the same direction as the perforated base part of the receptacle part has a series of parallel ribs in the form of arcs of circles, to enable it to stand securely on any container with a circular mouth.

Other advantages and characteristics of the invention are disclosed in dependent claims 2-6 and will become clear in the course of the following detailed description, provided by way of non-restrictive example, of two embodiments thereof. This description refers to the accompanying drawings in which:
Figure 1 is an exploded elevation of the vegetable mill according to the invention;
Figure 2 is a longitudinal section through a first embodiment of the vegetable mill according to the invention;
Figure 3 is a plan view of the vegetable mill shown in Figure 2, seen from below; and
Figure 4 is a longitudinal section through a detail of a second embodiment of the vegetable mill according to the invention.

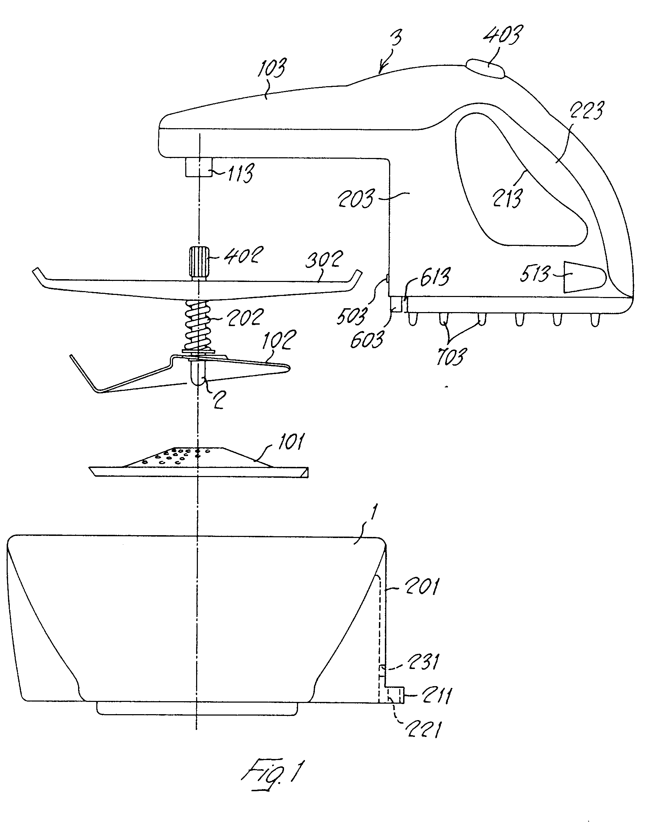

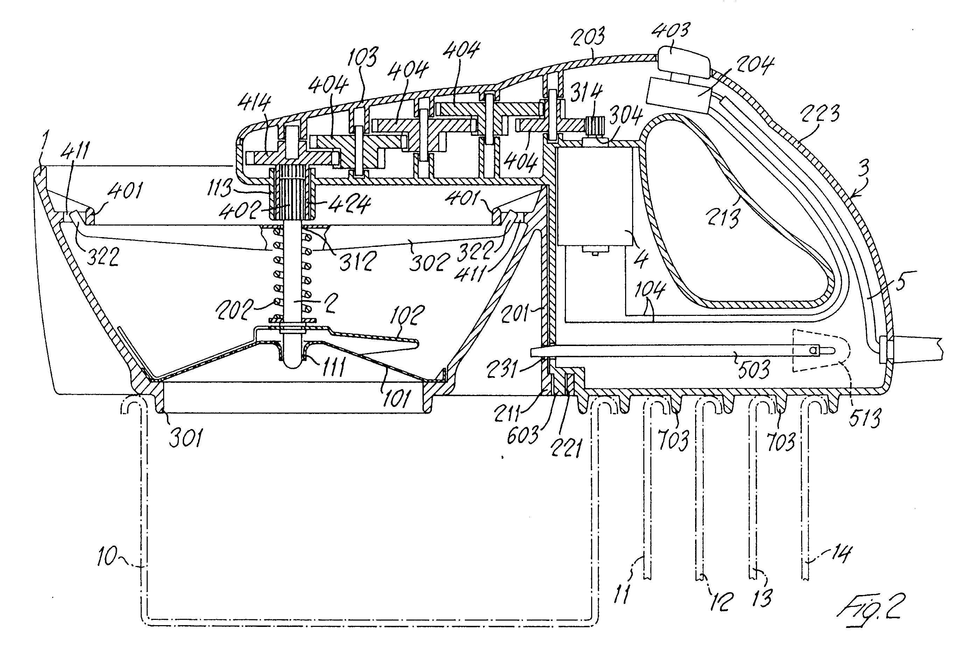

Figure 1 is an exploded view of the vegetable mill according to the invention. The numeral 1 denotes the receptacle part of said vegetable mill. This part is a frustoconical receptacle which is open at one end and provided at the other end with a removable perforated base part 101. The receptacle 1 comprises, around a portion of its side wall, the apron 201, which is formed integrally therewith and whose extremity nearest the base part 101 has an outwardly-projecting radial lug 211 through which there passes an axial through hole 221, whose purpose will be described below. Inserted into the receptacle 1 is the shaft 2 (see Figure 2), near to one end of which the screw 102 is fixed, while a splined cylindrical shaft portion 402 is fixed to the other end. A beam 302 is fitted on said shaft by means of an axial hole (not shown, see Fig. 2) formed in this beam; a spring 202 is mounted on the shaft 2 between said beam 302 and said screw 102. The handle part 3, which contains the drive means (shown in Figure 2) comprises a body 203 with a hand hole 213 defining the handle proper 223. Extending radially from said body 203 is an arm 103, at whose free end the power takeoff 113 is axially located. On the side of this part furthest from the base of the container 1 is the push button 403, while on the side wall, close to the edge that faces in the same direction as the base part 101 of said receptacle 1, is the slide for controlling the catch 503 whose end projects out of the wall of the handle towards the receptacle 1. The side of the handle part 3 that faces in the same direction as the base part 101 of the receptacle 1 includes the ribs 703, whose purpose will be described later, and the pin 603, projecting axially from the recess 613.

Illustrated in Figure 2 in longitudinal section is a first embodiment of the vegetable mill in accordance with the invention. As already described earlier, the receptacle 1 has an open end, and, at the other end, a removable perforated base part 101. At this end the outer edge of the receptacle 1 has an axial flange 301, the function of which will be described below. The base part 101 has an axial through hole in which one end of the shaft 2, carrying the screw 102, is inserted and can rotate freely. This shaft passes through the axial hole 312 of the beam 302, whose ends 322 are inserted in the holes 411 in the lugs 401 projecting radially from the inside surface of the receptacle 1, near the rim of its open end. Mounted on the shaft 2, between said beam 302 and said screw 102 is a spring 202, coaxial with said shaft 2. Mounted on the opposite end of the shaft 2 to that inserted in the hole 111 of the base part 101 is a splined shaft portion 402, this end of the shaft fitting into the power takeoff 113 of the handle part 3.

The handle part 3 comprises the body 203 containing the electric motor 4 connected by means of the wires 104 to the switch 204, which is operated via the button 403 projecting from said body 203 of the handle part 3 and in turn connected to the alternating-current power lead 5. At one end the motor 4 is fitted with a shaft 304 bearing a gear wheel 314 which meshes with the first of a train of gears 404 housed inside the arm 103 projecting radially from said body 203. At the free end of said arm 103, the gear 414 engaging with the train of gears 404 has an axial socket 424 designed to engage with the splined shaft portion 402 on the free end of the shaft 2.

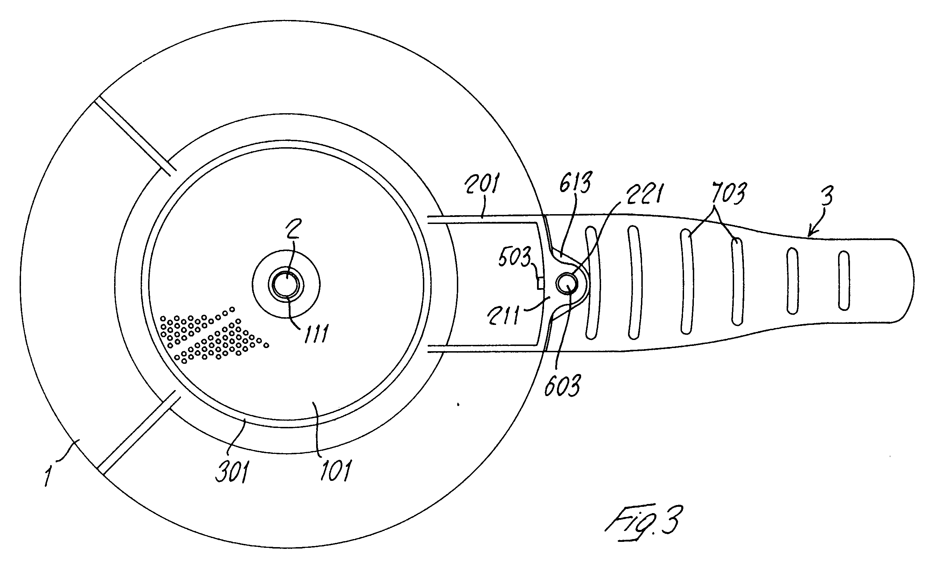

The side of the handle part 3 that faces in the same direction as the base of the receptacle 1 has a series of mutually parallel ribs 703 that enable the vegetable mill to be placed on receptacles of different sizes, as shown in the figure by the container 10 and the container walls 11, 12, 13 and 14. This side of the handle also includes a pin 603 projecting axially from the inside of the recess 613 (see Fig. 3), which engages with the hole 221 in the lug 211 projecting outwards from the bottom edge of the apron 201 of the receptacle 1. Said apron additionally includes the hole 231, already mentioned, into which the end of the catch 503 controlled by the slide 513 passes.

Illstrated in Figure 3 is the embodiment of the vegetable mill shown in Figure 2, in a plan view from below. Parts that are the same have been given the same numbers. The figure illustrates particularly clearly the side-by-side connection between the receptacle 1 and the handle part 3. This connection involves the lug 211 on the apron 201 of the receptacle 1 and the pin 603 on the handle 203 of the handle part 3. The complete lug 211 fits into the cavity 613 of the handle, in which the pin 603 is formed. The figure also shows the end of the catch 503 jutting out of the hole 231 in the apron 201 of the receptacle 1.

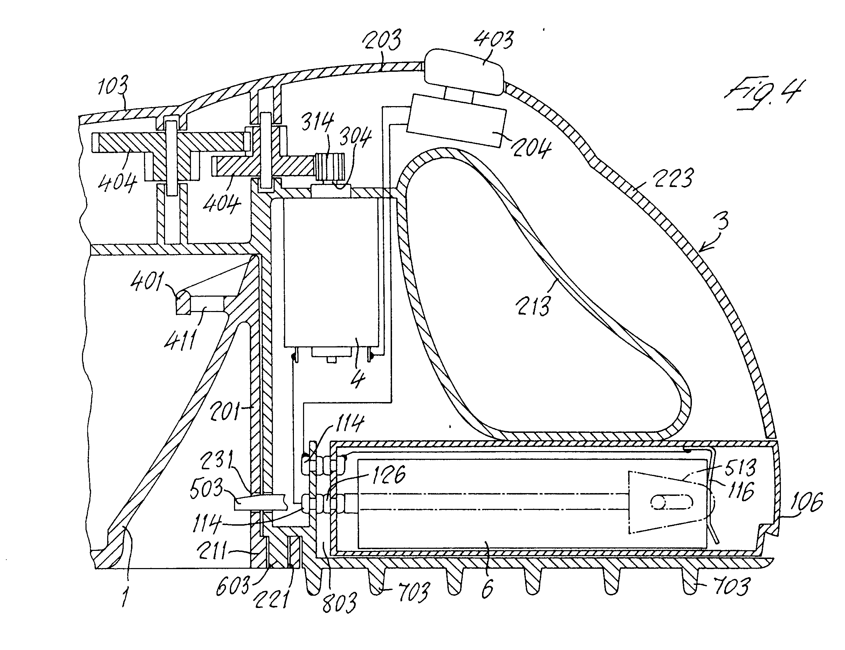

Figure 4 shows a detail in longitudinal section of an alternative embodiment of the vegetable mill according to the invention. In the figure, parts that are the same have been given the same numbers. In the present case, the power is not supplied by a lead that has to be connected to the alternating-current mains, but by a battery 6 inserted in the housing part 106, which is placed removably inside a space 803 in the body 203 of the handle part 3. This space is situated between the end of said handle part 3 that faces in the same direction as the base part of said receptacle 1 and the hand hole 213. The housing part 106 is equipped with appropriate contacts 116 and 126 with the poles of said battery; these contacts are connected to the contacts 114 mounted on a wall at the end of the space 803. The wires 104 connect the battery 6 to the motor 4 and to the switch 204, which closes or opens the resulting circuit when the push button 403 is operated.

The following account will show clearly how the vegetable mill according to the invention works. The vegetable mill, as illustrated in Figure 2, can be used to chop and comminute vegetables and herbs, as is well known. When it is wished to turn on the screw 102 inside the receptacle 1, the user simply depresses the push button 403, which throws the switch 204 and starts the motor 4. The drive is then transmitted along the gear train 404 to the socket 424 of the gear 414 inserted in the power takeoff 113, and engaging with the shaft portion 402 on the end of the shaft 2. When the operations on the herbs or vegetables or similar material are finished, it must be possible to wash the receptacle 1 and the screw 102 without wetting the handle part 3 containing the gears, motor and power supply. For this purpose the connection between said handle part 3 and said receptacle 1 in the vegetable mill according to the invention is easily disengaged: by moving the slide 513, the latch 503 is drawn out of the hole 231 in the apron 201 of the receptacle 1. The pin 603 is then removed from the hole 221 in the lug 211, and the latter is in turn withdrawn from the recess 613 in which it had been located. The power takeoff 113 and the socket 424 of the gear 414 which it contains are separated from the shaft portion 402 mounted on the end of the shaft. In this way the receptacle 1 is separated from the handle part 3; the shaft 2 can then be detached from it by removing both ends 322 of the beam 302 from the holes 411 of the lugs 401, and the perforated base 101. After cleaning, the vegetable mill can be put back together again by reversing the above procedure.

Advantageously, said vegetable mill may be powered either by alternating current, that is, have a power lead which is connected to the mains, or by direct current, that is, have a disposable or rechargeable battery. As illustrated in Figure 4, said battery is inserted in a removable housing part 106, which can be removed from the space 803 inside the handle part 3 in which it is housed, either for recharging or, when necessary, for replacing the battery.

The side of the handle part 3 facing in the same direction as the base 101 of the receptacle 1 has a series of ribs 703 in the form of mutually parallel arcs of circles, as shown in Figures 2 and 3. These ribs make it possible, as outlined in Figure 2, to stand the vegetable mill on a collecting container which may be of widely varying diameter, thus making this support very secure. As illustrated in the figure referred to, the flange 301 under the receptacle 1 provides the other point of support for the container 10.

The vegetable mill as conceived herein solves a number of problems that had arisen with the prior art in a simple and effective manner, providing not only the best access for maintaining the receptacle but also a secure seating for the vegetable mill when operating on a collecting container.

## Claims

1. Vegetable mill comprising: a cylindrical or frustoconical receptacle part (1) which is open at one end and provided at the other end with a removable perforated base part(101), a shaft (2) on which is fixed, near that end of said shaft which rotates in an axial hole in said base part, a screw (102), a beam (302) with an axial hole (312) inserted on to said shaft (2), its ends being engaged with supporting means (401) projecting from the inside surface of said receptacle (1); the mill being characterized in that it comprises a handle part (3) comprising means (4) for driving said shaft and means (5) for powering said drive means, said receptacle part (1) and said handle part (3) being removably connected side by side, and the free end of said shaft (2), and said drive means (4), being provided with releasable means of mutual engagement, said handle part (3) comprising a body (3) containing said drive means (4) and said power supply means (5), a handle proper (223), and an arm (103) which projects radially from said body (3) and has at its free end a power takeoff (113) arranged axially with respect to said arm (103), said power takeoff (113) being connected in some suitable way to said drive means (4) and engageable with said free end of said shaft (2).

2. Vegetable mill according to Claim 1, in which said drive means comprise a geared-down electric motor (4) supplied with alternating current.

3. Vegetable mill according to Claim 1, in which said drive means comprise a geared-down electric motor (4) supplied with direct current by disposable or rechargeable batteries.

4. Vegetable mill according to Claim 1, in which said receptacle part (1) has a lug (211) projecting radially from its outer lateral surface near the end that has the base part (101), said lug (211) having an axial hole (221), while said handle part (3) has on its outer surface on the side facing in the same direction as said base part (101) of the receptacle a recess (613) capable of accommodating said lug (211), an axially projecting pin (603) being formed in this recess.

5. Vegetable mill according to Claim 1, in which the mutually confronting side walls of said receptacle part (1) and of said handle part (3) are provided with, respectively, a radial hole (231) and a catch part (503) operated by a slide (513) and designed to engage in said hole (231).

6. Vegetable mill according to any one of the previous claims, in which said handle part (3) comprises, on the side facing in the same direction as the perforated base part (101) of said receptacle (1), a series of parallel ribs (703) in the form of arcs of circles set apart at suitable intervals.

## Patentansprüche

1. Gemüsepresse mit einem zylindrischen oder kegelstumpfförmigen Behälterteil (1), das an einem Ende offen ist und am anderen mit einem entfernbaren perforierten Basisteil (101) versehen ist, einer Welle (2), auf welcher nahe jenem Ende der Welle, welches sich in einem axialen Loch in dem Basisteil dreht, eine Schraube (102) befestigt ist, einem Träger (302) mit einem axialen Loch (112), der auf die Welle (2) aufgesetzt ist, wobei seine Enden in Eingriff mit einer Trageeinrichtung (401) stehen, die von der Innenfläche des Behälters (1) vorspringt, **dadurch gekennzeichnet**, daß die Gemüsepresse ein Handgriffteil (3), das eine Einrichtung (4) zum Antrieb der Welle und eine Einrichtung (5) zur Energieversorgung der Antriebseinrichtung umfaßt, wobei das Behälterteil (1) und das Handgriffteil Seite an Seite entfernbar verbunden sind und das freie Ende der Welle (2) und die Antriebseinrichtung (4) mit lösbaren Einrichtungen zum wechselseitigen Eingriff versehen sind, das Handgriffteil (3) einen Körper (3), der die Antriebseinrichtung (4) und die Energieversorgungseinrichtung (5) enthält, einen geeigneten Handgriff (223) und einen Arm (103), der von dem Körper (3) radial vorspringt und an seinem freien Ende eine bezüglich des Armes (103) axial angeordnete Energieabnahme (113) hat, wobei die Energieabnahme (113) in geeigneter Weise mit der Antriebseinrichtung (104) verbunden ist und in das freie Ende der Welle (2) eingreifbar ist, umfaßt.

2. Gemüsepresse nach Anspruch 1, bei welcher die Antriebseinrichtung einen untersetzten Elektromotor (4) umfaßt, der mit Wechselstrom angetrieben wird.

3. Gemüsepresse nach Anspruch 1, bei welcher die Antriebseinrichtung einen untersetzten Elektromotor (4) umfaßt, der mit Gleichstrom durch wegwerfbare oder wiederaufladbare Batterien versorgt wird.

4. Gemüsepresse nach Anspruch 1, bei welcher das Behälterteil (1) eine Stütze (211) hat, die von seiner äußeren Seitenfläche nahe dem Ende, das das Basisteil (101) hat, radial vorspringt, wobei die Stütze (211) ein axiales Loch (221) hat, während das Handgriffteil (3) auf seiner Außenfläche auf der in die gleiche Richtung wie das Basisteil (101) des Behälters blickenden Seite eine Vertiefung (613) hat, die die Stütze (211) aufnehmen kann, wobei ein axial vorspringender Stift (603) in dieser Vertiefung ausgebildet ist.

5. Gemüsepresse nach Anspruch 1, bei welcher die wechselseitig zueinander blickenden Seitenwände des Behälterteils (1) und des Handgriffteils (3) jeweils mit einem radialen Loch (231) und einem Sperrenteil (503) versehen sind, das durch einen Schieber (513) betätigt wird und so ausgebildet ist, daß es in das Loch (321) eingreift.

6. Gemüsepresse nach einem der vorausgehenenden Ansprüche, bei der das Handgriffteil (3) auf der in die gleiche Richtung wie das perforierte Basisteil (103) des Behälters (1) blickenden Seite eine Reihe paralleler Rippen (703) in der Form von Kreisbögen hat, die in geeigneten Abständen voneinander entfernt sind.

## Revendications

1. Presse-légumes comprenant : une partie de récipient (1) cylindrique ou tronconique qui est ouverte à une extrémité et munie à l'autre extrémité d'une partie de base (101) perforée amovible, un arbre (2) sur lequel est fixée, près de l'extrémité dudit arbre qui tourne dans un trou axial dans ladite partie de base, une pale (102), une poutre (302) avec un trou axial (312) inséré sur ledit arbre (2), son extrémité étant engagée avec des moyens de support (401) faisant saillie depuis la surface interne dudit récipient (1), le presse-légumes étant caractérisé en ce qu'il comprend une partie de poignée (3) comprenant des moyens (4) destinés à entraîner ledit arbre et des moyens (5) destinés à alimenter lesdits moyens d'entraînement, ladite partie de récipient (1) et ladite partie de poignée (3) étant connectées de manière amovible côte à côte, et l'extrémité libre dudit arbre (2) et lesdits moyens d'entraînement (4) étant munis de moyens détachables s'engageant mutuellement, ladite partie de poignée (3) comprenant un corps (3) contenant lesdits moyens d'entraînement (4) et lesdits moyens d'alimentation (5), une poignée propre (223) , et un bras (103) qui fait saillie radialement depuis ledit corps (3) et présente en son extrémité libre une prise de force (113) disposée axialement par rapport audit bras (103), ladite prise de force (113) étant connectée de manière adaptée auxdits moyens d'entraînement (4) et pouvant s'engager avec ladite extrémité libre dudit arbre (2).

2. Presse-légumes selon la revendication 1, dans lequel lesdits moyens d'entraînement comprennent un moteur électrique démultiplié (4) alimenté en courant alternatif.

3. Presse-légumes selon la revendication 1, dans lequel lesdits moyens d'entraînement comprennent un moteur électrique démultiplié (4) alimenté en courant direct au moyen de piles rechargeables ou jetables.

4. Presse-légumes selon la revendication 1, dans lequel ladite partie de récipient (1) présente une oreille (211) faisant saillie radialement depuis sa surface latérale externe à proximité de l'extrémité qui présente la partie de base (101), ladite oreille (211) présentant un trou axial (221), tandis que ladite partie de poignée (3) présente en sa surface externe sur le côté orienté dans la même direction que ladite partie de base (101) du récipient un évidement (613) pouvant recevoir ladite oreille (211), une cheville (603) faisant axialement saillie étant formée dans cet évidement.

5. Presse-légumes selon la revendication 1, dans lequel les parois latérales mutuellement face à face de ladite partie de récipient (1) et de ladite partie de poignée (3) sont munies respectivement d'un trou radial (231) et d'une partie d'accrochage (503) actionnée par un coulisseau (513) et destinée à s'engager dans ledit trou (231).

6. Presse-légumes selon l'une des revendications précédentes, dans lequel ladite partie de poignée (3) comprend, sur le côté orienté dans la même direction que la partie de base perforée (101) dudit récipient (1), une série de nervures parallèles (703) ayant la forme d'arcs de cercle espacés selon des intervalles adaptés.
